# EUROPÄISCHE PATENTSCHRIFT

(11) **EP 3 121 069 B1**
(45) Veröffentlichungstag und Bekanntmachung des Hinweises auf die Patenterteilung: **22.05.2019**
(21) Anmeldenummer: 16173284.7
(22) Anmeldetag: 07.06.2016
(51) Int. Cl.: B60R 25/24

(54) **AUSSCHALTEN DER AKTIVIERBARKEIT EINER FUNKTION MITTELS FUNK FÜR EIN FAHRZEUG**
REMOTE DEACTIVATION OF FUNCTION ACTIVATION FOR A VEHICLE
DESACTIVATION D'UNE FONCTION TÉLÉCOMMANDÉE POUR UN VEHICULE

(30) Priorität: 23.07.2015 DE 102015213934
(43) Veröffentlichungstag der Anmeldung: 25.01.2017
(73) Patentinhaber: Volkswagen Aktiengesellschaft, 38440 Wolfsburg (DE)
(72) Erfinder: Lohmann, Peter, 46414 Rhede (DE)

(56) Entgegenhaltungen:
- EP-A1- 3 061 658
- EP-A2- 0 908 589
- GB-A- 2 426 102
- JP-A- 2008 088 720
- US-A1- 2015 048 927
- Anonymous: "Telestart 91" In: "Telestart 91", 31. Dezember 2012 (2012-12-31), Webasto Thermo & Comfort SE, 82199 Gilching, Germany, XP055319474, Seiten 1-20, DOI: 1314649B04, * Seite 3 * * Seite 7 *

## Beschreibung

Ausschalten der Aktivierbarkeit einer Funktion mittels Funk für ein Fahrzeug Die vorliegende Erfindung betrifft das Ausschalten der Aktivierbarkeit einer Funktion mittels Funk für ein Fahrzeug.

Die DE 102 33 597 A1 offenbart ein Zugangssystem für ein Fahrzeug, wobei ein Warnsignal an einen Schlüssel ausgegeben wird bzw. ausgegeben werden kann, wenn ein Zugriff auf ein mit diesem Schlüssel gesichertes Objekt erfolgt. Die GB2426102A offenbart ein Zugangssystem für ein Fahrzeug, welches eine tragbare Vorrichtung und ein Fahrzeug umfasst, wobei die tragbare Vorrichtung Funksendemittel umfasst, um einen Funkbefehl an das Fahrzeug auszusenden, wobei das Fahrzeug Funkmittel, um den Funkbefehl zu empfangen, umfasst, wobei das Fahrzeug ausgestaltet ist, um abhängig von dem Funkbefehl eine Funktion des Fahrzeugs zu aktivieren, wenn eine Aktivierbarkeit der Funktion mittels Funk nicht ausgeschaltet ist.

Die meisten Fahrzeuge lassen sich nach dem Stand der Technik über eine Funkfernbedienung bedienen. Diese Bedienbarkeit mittels Funk weist allerdings den Nachteil auf, dass ein Unberechtigter das Fahrzeug bedienen kann, ohne im Besitz des berechtigten Schlüssels zu sein. Ein Beispiel der Bedienung eines Fahrzeugs, ohne im Besitz des berechtigten Schlüssels zu sein, ist die sogenannte Relay Attack oder Relay Station Attack, bei welcher die geringe Reichweite des berechtigten Schlüssels mit Relaystationen verlängert wird, um unbemerkt vom Besitzer des berechtigten Schlüssels einen Zugriff auf das Fahrzeug zu bekommen.

Daher stellt sich die vorliegende Erfindung die Aufgabe, einen unberechtigten Zugriff mittels Funkbefehlen auf ein Fahrzeug zumindest zu erschweren.

Erfindungsgemäß wird diese Aufgabe durch ein Verfahren zum Aktivieren einer Funktion eines Fahrzeugs nach Anspruch 1, durch ein Fahrzeug nach Anspruch 10 und durch ein System nach Anspruch 12 gelöst. Die abhängigen Ansprüche definieren bevorzugte und vorteilhafte Ausführungsformen der vorliegenden Erfindung.

Im Rahmen der vorliegenden Erfindung wird ein Verfahren zum Aktivieren einer Funktion eines Fahrzeugs bereitgestellt, wobei das Verfahren folgende Schritte umfasst:
- Aussenden eines Funkbefehls von einer tragbaren Vorrichtung (z.B. einem Funkschlüssel oder einem Smartphone) an das Fahrzeug. Durch diesen Funkbefehl soll die Funktion des Fahrzeugs aktiviert werden.
- Aktivieren der Funktion, wenn die Aktivierbarkeit dieser Funktion mittels Funk nicht ausgeschaltet ist. Mit anderen Worten kann die Aktivierung der Funktion über Funk (d.h. mit einem Funkbefehl) erlaubt sein oder nicht erlaubt sein. Über den Funkbefehl lässt sich die Funktion nur aktivieren, wenn die Aktivierung der Funktion mittels Funk erlaubt ist (d.h. die Aktivierbarkeit der Funktion mittels Funk eingeschaltet ist). Insbesondere wird bei Empfang des Funkbefehls zur Aktivierung der Funktion erst überprüft, ob die Aktivierbarkeit dieser Funktion mittels Funk eingeschaltet oder ausgeschaltet ist. Nur wenn die Aktivierbarkeit der Funktion mittels Funk eingeschaltet bzw. nicht ausgeschaltet ist, führt der Funkbefehl zur Aktivierung der Funktion.

Durch das erfindungsgemäße Verfahren kann der Benutzer eines Fahrzeugs in bestimmten Situationen (beispielsweise in unübersichtlichen Umgebungen, wenn der Benutzer das Risiko eines Diebstahls des Fahrzeugs als hoch einschätzt) die Aktivierung bestimmter oder aller Funktionen des Fahrzeugs mittels Funk ausschalten (d.h. der Benutzer deaktiviert die Möglichkeit, die entsprechenden Funktionen mit einem Funkbefehl zu aktivieren), so dass das Fahrzeug anschließend beispielsweise nur noch mit einem mechanischen Schlüssel bedient werden kann (oder so dass die Funktion des Fahrzeugs anschließend beispielsweise nur noch mit einem mechanischen Schlüssel aktiviert werden kann). Wenn die Aktivierung einer bestimmten Funktion mittels Funk nicht möglich ist, ist eine Relay Attack zur Aktivierung dieser Funktion ebenfalls nicht möglich.

Bei der Funktion oder bei den Funktionen, deren Aktivierbarkeit mittels Funk ausgeschaltet werden können, kann es sich um folgende Funktionen handeln:
- Entriegelung einer Zentralverriegelung des Fahrzeugs.
- Starten eines Antriebsmotors des Fahrzeugs.

Natürlich ist es erfindungsgemäß möglich, die Aktivierbarkeit mittels Funk für jede erdenkliche Funktion des Fahrzeugs auszuschalten.

Das Ausschalten der Aktivierbarkeit der Funktion(en) erfolgt insbesondere durch einen Benutzer.

Das Einschalten und Ausschalten der Aktivierbarkeit der Funktion(en) kann beispielsweise innerhalb des Fahrzeugs durchgeführt werden, so dass sichergestellt ist, dass die Aktivierbarkeit nur durch eine Person vorgenommen werden kann, welche Zutritt zum Fahrzeug hat. Es sind aber auch andere Szenarien denkbar, um die Aktivierbarkeit der Funktion(en) ein- oder auszuschalten, wie es im Folgenden beschrieben wird.

Zum Beispiel kann die Aktivierbarkeit der Funktion mittels Funk ausgeschaltet werden, wenn von dem Fahrzeug ein bestimmter Funkbefehl von der tragbaren Vorrichtung empfangen wird. Mit anderen Worten ist es nicht mehr möglich, die Funktion mittels Funk (d.h. mit einem der Funktion zugeordneten Funkbefehl) zu aktivieren, wenn das Fahrzeug vorher den bestimmten Funkbefehl zum Ausschalten der Aktivierbarkeit empfängt.

Bei dieser Ausführungsform lässt sich die Aktivierbarkeit der Funktion mittels Funk also vorteilhafterweise über die Funkfernbedienung (z.B. einen Funkschlüssel oder Smartphone) selbst ausschalten.

Eine weitere Möglichkeit besteht darin, die Aktivierbarkeit der Funktion mittels Funk auszuschalten, wenn sich die tragbare Vorrichtung nicht mehr innerhalb der Funkempfangsreichweite des Fahrzeugs befindet. Bei dieser Ausführungsform wird das Fahrzeug in eine Art Vorausschaltungs-Betriebszustand versetzt. Solange sich das Fahrzeug in diesem Vorausschaltungs-Betriebszustand befindet und die tragbare Vorrichtung erfasst (d.h. die tragbare Vorrichtung befindet sich innerhalb der Funkreichweite des Fahrzeugs), kann die Funktion mittels Funk (d.h. über einen entsprechenden Funkbefehl der tragbaren Vorrichtung) aktiviert werden. Sobald das Fahrzeug keine Kommunikationsverbindung mehr zu der tragbaren Vorrichtung aufbauen kann (d.h. die tragbare Vorrichtung hat die Funkempfangsreichweite des Fahrzeugs verlassen), verlässt das Fahrzeug seinen Vorausschaltungs-Betriebszustand und die Aktivierbarkeit der Funktion mittels Funk wird ausgeschaltet. Das gilt insbesondere auch dann weiter (d.h. die Aktivierbarkeit der Funktion mittels Funk bleibt ausgeschaltet), wenn sich die tragbare Vorrichtung wieder innerhalb der Funkreichweite des Fahrzeugs befindet.

Als Variante der vorab beschriebenen Ausführungsform kann die Aktivierbarkeit der Funktion mittels Funk nur dann ausgeschaltet werden, wenn vorher ein bestimmter Funkbefehl der tragbaren Vorrichtung von dem Fahrzeug erfasst wird.

Bei dieser Variante wird das Fahrzeug quasi durch den Empfang des bestimmten Funkbefehls in den Vorausschaltungs-Betriebszustand versetzt. Sobald sich allerdings die tragbare Vorrichtung aus der Funkreichweite des Fahrzeugs entfernt, verlässt das Fahrzeug seinen Vorausschaltungs-Betriebszustand und schaltet die Aktivierbarkeit der Funktion mittels Funk aus, wie es vorab beschrieben ist.

Gemäß einer weiteren erfindungsgemäßen Ausführungsform ist die Aktivierbarkeit der Funktion mittels Funk nur für eine vorbestimmte Zeitspanne ausgeschaltet. Nach dieser vorbestimmten Zeitspanne ist die Funktion wieder mittels Funk aktivierbar. Dabei kann die vorbestimmte Zeitspanne beispielsweise vom Benutzer des Fahrzeugs konfiguriert werden. Daneben ist es denkbar auch eine minimale Zeitspanne und eine maximale Zeitspanne vorzugeben, wodurch Grenzen vorgegeben werden können, innerhalb welcher der Benutzer die Zeitspanne wählen kann.

Diese weitere Ausführungsform lässt sich mit allen vorab beschriebenen Möglichkeiten zum Ausschalten der Aktivierbarkeit der Funktion mittels Funk kombinieren. Diese Ausführungsform bietet den Vorteil, dass die Aktivierbarkeit der Funktion nicht manuell wieder eingeschaltet werden muss, da die Aktivierbarkeit automatisch nach Ablauf der vorbestimmten Zeitspanne eingeschaltet wird.

Diese weitere Ausführungsform kann mit einigen vorab beschriebenen Ausführungsformen zu folgenden Varianten kombiniert werden:
- Beispielsweise kann die vorbestimmte Zeitspanne erst dann zu laufen beginnen, wenn von dem Fahrzeug ein bestimmter Funkbefehl von der tragbaren Vorrichtung empfangen wird. Bei dieser Variante schaltet der bestimmte Funkbefehl von der tragbaren Vorrichtung die Aktivierbarkeit der Funktion mittels Funk aus, wobei die Aktivierbarkeit dann automatisch nach Ablauf der vorbestimmten Zeitspanne wieder eingeschaltet wird. Wenn sich bei dieser Variante die tragbare Vorrichtung noch immer innerhalb der Funkempfangsreichweite des Fahrzeugs befinden sollte, wenn die Zeitspanne abläuft, kann der Ablauf der Zeitspanne erneut gestartet werden, indem von der tragbaren Vorrichtung der bestimmte Funkbefehl nochmals abgesetzt und vom Fahrzeug empfangen wird.
- Beispielsweise kann die vorbestimmte Zeitspanne erst dann zu laufen beginnen, wenn sich die tragbare Vorrichtung aus der Funkempfangsreichweite des Fahrzeugs heraus bewegt. Bei dieser Variante befindet sich das Fahrzeug in dem vorab beschriebenen Vorausschaltungs-Betriebszustand. Wenn das Fahrzeug keine Kommunikationsverbindung mehr zu der tragbaren Vorrichtung aufbauen kann (d.h. die tragbare Vorrichtung hat die Funkempfangsreichweite des Fahrzeugs verlassen) verlässt das Fahrzeug diesen Vorausschaltungs-Betriebszustand und schaltet die Aktivierbarkeit der Funktion aus, welche dann nach Ablauf der vorbestimmten Zeitspanne wieder eingeschaltet wird.
- Eine Kombination der vorab beschriebenen Varianten ist auch möglich. Dabei wird das Fahrzeug anhand eines bestimmten Funkbefehls der tragbaren Vorrichtung in den Vorausschaltungs-Betriebszustand versetzt. Sobald sich die tragbare Vorrichtung aus der Funkempfangsreichweite des Fahrzeugs bewegt, verlässt das Fahrzeug diesen Vorausschaltungs-Betriebszustand und schaltet die Aktivierbarkeit der Funktion aus, welche dann nach Ablauf der vorbestimmten Zeitspanne wieder eingeschaltet wird.

Mit der tragbaren Vorrichtung kann signalisiert werden, dass die Aktivierbarkeit der Funktion mittels Funk ausgeschaltet ist.

Mit dieser Ausführungsform wird dem Benutzer über die tragbare Vorrichtung vorteilhafterweise mitgeteilt, dass die Aktivierung der Funktion über Funk zumindest temporär nicht möglich ist.

Im Rahmen der vorliegenden Erfindung wird auch ein Fahrzeug bereitgestellt, welches Funkmittel umfasst. Die Funkmittel sind ausgestaltet, um einen Funkbefehl einer tragbaren Vorrichtung (z.B. Funkschlüssel oder Smartphone) zu empfangen. Das Fahrzeug ist ausgestaltet, um eine Funktion des Fahrzeugs zu aktivieren, wenn zum einen der Funkbefehl erfasst wird und wenn zum anderen die Aktivierbarkeit der Funktion mittels Funk nicht ausgeschaltet ist.

Das erfindungsgemäße Fahrzeug unterscheidet sich von einem Fahrzeug nach dem Stand der Technik darin, dass bei dem erfindungsgemäßen Fahrzeug die Aktivierbarkeit der Funktion(en) über Funk ausgeschaltet und insbesondere auch eingeschaltet werden können.

Die Vorteile des erfindungsgemäßen Fahrzeugs entsprechen im Wesentlichen den Vorteilen des erfindungsgemäßen Verfahrens, welche vorab im Detail dargestellt sind, so dass hier auf eine Wiederholung verzichtet wird.

Schließlich wird im Rahmen der vorliegenden Erfindung ein System bereitgestellt, welches eine tragbare Vorrichtung und ein Fahrzeug umfasst. Die tragbare Vorrichtung umfasst Funkmittel, um einen Funkbefehl an das Fahrzeug auszusenden. Das Fahrzeug umfasst Funkmittel, um den Funkbefehl der tragbaren Vorrichtung zu empfangen. Das Fahrzeug ist ausgestaltet, um abhängig von dem Funkbefehl eine Funktion des Fahrzeugs zu aktivieren, wenn eine Aktivierbarkeit der Funktion mittels Funk nicht ausgeschaltet ist.

Auch die Vorteile des erfindungsgemäßen Systems entsprechen im Wesentlichen den Vorteilen des erfindungsgemäßen Verfahrens, welche vorab im Detail dargestellt sind, so dass hier auf eine Wiederholung verzichtet wird.

Gemäß einer bevorzugten Ausführungsform umfasst die tragbare Vorrichtung Signalisierungsmittel, um zu signalisieren, dass die Aktivierbarkeit der Funktion mittels Funk ausgeschaltet ist.

Wenn die tragbare Vorrichtung ihren Funkbefehl zur Aktivierung der Funktion an das Fahrzeug sendet und das Fahrzeug erkennt, dass es die Funktion ausgehend von dem Funkbefehl nicht aktivieren kann, da die Aktivierbarkeit dieser Funktion mittels Funk ausgeschaltet ist, kann das Fahrzeug eine entsprechende negative Bestätigung an die tragbare Vorrichtung zurücksenden. Mit Hilfe ihrer Signalisierungsmittel, welche optischer, akustischer oder haptischer Art sein können, signalisiert die tragbare Vorrichtung ihrem Benutzer, dass die Aktivierbarkeit der Funktion mittels Funk im Fahrzeug zumindest vorübergehend ausgeschaltet ist.

Die vorliegende Erfindung ist insbesondere für Kraftfahrzeuge geeignet. Selbstverständlich ist die vorliegende Erfindung nicht auf diesen bevorzugten Anwendungsbereich eingeschränkt, da die vorliegende Erfindung auch bei Schiffen, Flugzeugen sowie gleisgebundenen oder spurgeführten Fahrzeugen einsetzbar ist. Selbst der Einsatz bei stationären Objekten (z.B. beim Öffnen einer Tür eines Gebäudes) ist denkbar.

Im Folgenden wird die vorliegende Erfindung anhand bevorzugter erfindungsgemäßer Ausführungsformen mit Bezug zu den Figuren im Detail erläutert.

In Fig. 1 ist schematisch ein erfindungsgemäßes System und ein erfindungsgemäßes Fahrzeug dargestellt.

In Fig. 2 ist der Flussplan zur Erläuterung der Erfindung abgebildet.

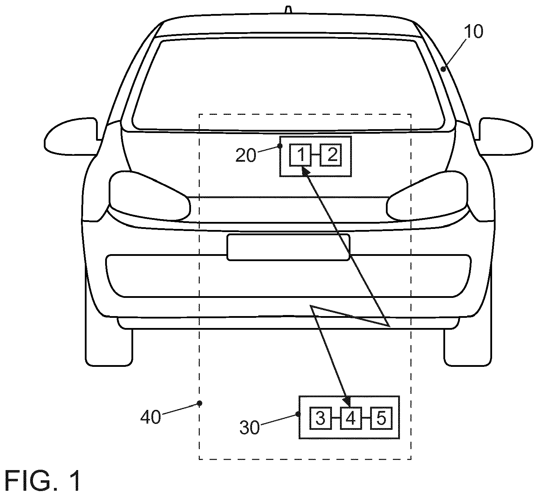

In Fig. 1 ist schematisch ein erfindungsgemäßes Fahrzeug 10 dargestellt, welches eine Vorrichtung 20 umfasst. Diese Vorrichtung 20 umfasst ihrerseits einen Funkempfänger 1 und eine Steuerung 2. Darüber hinaus ist in Fig. 1 eine tragbare Vorrichtung 30 dargestellt, welche ein Betätigungselement 3, einen Funksender 4 und eine LED 5 umfasst. Die Vorrichtung 20 des Fahrzeugs 10 und die tragbare Vorrichtung 30 bilden ein erfindungsgemäßes System 40.

Wenn der Benutzer der tragbaren Vorrichtung 30 zur Aktivierung einer Funktion des Fahrzeugs 10 das Betätigungselement 3 der tragbaren Vorrichtung 30 betätigt, sendet die tragbare Vorrichtung 30 über ihren Funksender 4 einen Funkbefehl an das Fahrzeug 10. Dieser Funkbefehl wird von dem Funkempfänger 1 der Vorrichtung 20 bzw. des Fahrzeugs 10 erfasst und von der Steuerung 2 ausgewertet. Die Steuerung 2 überprüft, ob die Aktivierbarkeit der Funktion mittels Funk eingeschaltet oder ausgeschaltet ist. Wenn die Aktivierbarkeit der Funktion eingeschaltet ist, aktiviert die Steuerung 2 die Funktion des Fahrzeugs 10. Wenn die Aktivierbarkeit der Funktion mittels Funk dagegen ausgeschaltet ist, wird die Funktion nicht aktiviert. In diesem Fall kann die Vorrichtung 20 bzw. das Fahrzeug 10 eine negative Bestätigung an die tragbare Vorrichtung 30 senden. Wenn die Vorrichtung 30 diese negative Bestätigung empfängt, wird dem Benutzer über die LED 5 signalisiert, dass die Funktion über Funk nicht aktiviert werden kann. In diesem Fall kann der Benutzer beispielsweise die entsprechende Funktion mit Hilfe eines mechanischen Schlüssels, welcher für das Fahrzeug 10 berechtigt ist, manuell (ohne Funkbefehl) aktivieren.

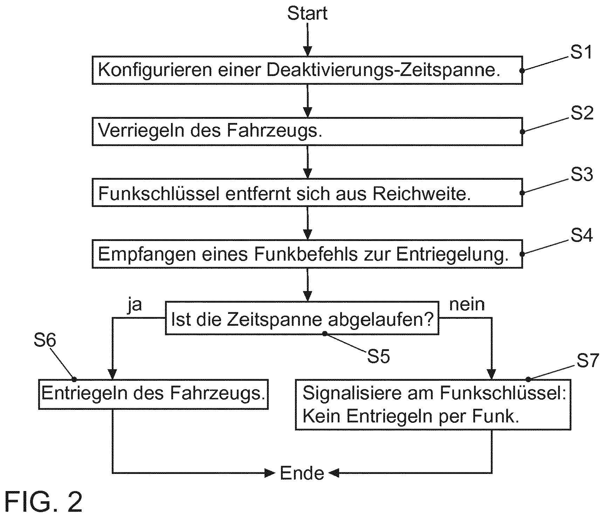

In Fig. 2 ist ein Flussplan dargestellt, um das erfindungsgemäße Verfahren zu beschreiben.

Im Schritt S1 wird eine Deaktivierungs-Zeitspanne konfiguriert oder festgelegt. Diese Deaktivierungs-Zeitspanne definiert eine Zeitspanne, während welcher die Aktivierung einer bestimmten Funktion des Fahrzeugs über einen Funkbefehl nicht möglich ist. Im Schritt S2 wird das Fahrzeug verriegelt, und im Schritt S3 erkennt das Fahrzeug 10, dass sich der für das Fahrzeug 10 berechtigte Funkschlüssel 30 aus der Funkempfangsreichweite des Fahrzeugs 10 heraus bewegt hat. Sobald das Fahrzeug 10 im Schritt S3 erkannt hat, dass sich der Funkschlüssel 30 nicht mehr innerhalb der Funkempfangsreichweite des Fahrzeugs 10 befindet, schaltet das Fahrzeug 10 die Aktivierbarkeit der entsprechenden Funktion aus und die Deaktivierungs-Zeitspanne beginnt zu laufen.

Wenn anschließend im Schritt S4 ein Funkbefehl zur Aktivierung der entsprechenden Funktion (beim vorliegenden Beispiel der Entriegelung des Fahrzeugs 10) erfasst wird, wird im Schritt S5 überprüft, ob die entsprechende Funktion mittels Funk aktivierbar ist, was dann der Fall ist, wenn die Deaktivierungs-Zeitspanne inzwischen abgelaufen ist. Wenn die Zeitspanne inzwischen abgelaufen ist (d.h. die entsprechende Funktion ist wieder mittels Funk aktivierbar), wird die entsprechende Funktion aktiviert (im vorliegenden Fall wird das Fahrzeug 10 im Schritt S6 entriegelt). Wenn dagegen die Zeitspanne noch nicht abgelaufen ist (d.h. die Aktivierbarkeit der entsprechenden Funktion mittels Funk ist nach wie vor ausgeschaltet), wird die Funktion nicht aktiviert bzw. durchgeführt (das Fahrzeug 10 wird nicht entriegelt) und im Schritt S7 wird über den Funkschlüssel 30 signalisiert, dass die Funktion mittels Funk nicht aktiviert werden kann.

### Bezugszeichenliste

- 1: Funkempfänger
- 2: Steuerung
- 3: Betätigungselement
- 4: Funksender
- 5: LED
- 10: Fahrzeug
- 20: Vorrichtung
- 30: Funkschlüssel
- 40: System
- S1-S7: Verfahrensschritt

## Patentansprüche

1. Verfahren zum Aktivieren einer Funktion eines Fahrzeugs (10), umfassend:
Aussenden eines Funkbefehls von einer tragbaren Vorrichtung (30) an das Fahrzeug (10), und
Aktivieren der Funktion, wenn eine Aktivierbarkeit der Funktion mittels Funk nicht ausgeschaltet ist,
wobei die Aktivierbarkeit der Funktion mittels Funk ausgeschaltet wird, sobald sich die tragbare Vorrichtung (30) aus der Funkempfangsreichweite des Fahrzeugs (10) bewegt.

2. Verfahren nach Anspruch 1,
**dadurch gekennzeichnet,**
**dass** die Funktion zumindest eine Funktion umfasst aus einer Gruppe bestehend aus:
Entriegeln einer Zentralverriegelung des Fahrzeugs (10), und
Starten eines Motors des Fahrzeugs (10).

3. Verfahren nach Anspruch 1 oder 2,
**dadurch gekennzeichnet,**
**dass** ein Ausschalten der Aktivierbarkeit durch einen Benutzer erfolgt.

4. Verfahren nach einem der vorhergehenden Ansprüche,
**dadurch gekennzeichnet,**
**dass** die Aktivierbarkeit der Funktion mittels Funk ausgeschaltet wird, sobald von dem Fahrzeug (10) ein bestimmter Funkbefehl von der tragbaren Vorrichtung (30) empfangen wird.

5. Verfahren nach einem der vorhergehenden Ansprüche,
**dadurch gekennzeichnet,**
**dass** die Aktivierbarkeit der Funktion mittels Funk nur ausgeschaltet wird, wenn vorher von dem Fahrzeug (10) ein bestimmter Funkbefehl der tragbaren Vorrichtung (30) empfangen wird.

6. Verfahren nach einem der vorhergehenden Ansprüche,
**dadurch gekennzeichnet,**
**dass** die Aktivierbarkeit der Funktion mittels Funk für eine vorbestimmte Zeitspanne ausgeschaltet ist, wobei die Funktion nach Ablauf der Zeitspanne mittels Funk aktivierbar ist.

7. Verfahren nach Anspruch 6,
**dadurch gekennzeichnet,**
**dass** die Zeitspanne konfigurierbar ist.

8. Verfahren nach einem der vorhergehenden Ansprüche,
**dadurch gekennzeichnet,**
**dass** mittels der tragbaren Vorrichtung signalisiert wird, dass die Aktivierbarkeit der Funktion mittels Funk ausgeschaltet ist.

9. Fahrzeug, welches Funkmittel umfasst, und tragbare Vorrichtung (30), welche Funksendemittel (4) umfasst wobei die Funkmittel (1) zum Empfang eines Funkbefehls ausgestaltet sind, und wobei das Fahrzeug (10) zur Aktivierung einer Funktion des Fahrzeugs (10) abhängig von dem Funkbefehl ausgestaltet ist, wenn eine Aktivierbarkeit der Funktion mittels Funk nicht ausgeschaltet ist,
wobei das Fahrzeug (10) ausgestaltet ist, um die Aktivierbarkeit der Funktion mittels Funk auszuschalten, sobald sich die tragbare Vorrichtung (30) aus der Funkempfangsreichweite des Fahrzeugs (10) bewegt.

10. Fahrzeug nach Anspruch 9, welches zur Durchführung des Verfahrens nach einem der Ansprüche 1-8 ausgestaltet ist.

11. System, welches eine tragbare Vorrichtung (30) und ein Fahrzeug (10) umfasst,
wobei die tragbare Vorrichtung (30) Funksendemittel (4) umfasst, um einen Funkbefehl an das Fahrzeug (10) auszusenden,
wobei das Fahrzeug (10) Funkmittel (1), um den Funkbefehl zu empfangen, umfasst,
wobei das Fahrzeug (10) ausgestaltet ist, um abhängig von dem Funkbefehl eine Funktion des Fahrzeugs (10) zu aktivieren, wenn eine Aktivierbarkeit der Funktion mittels Funk nicht ausgeschaltet ist,
wobei das Fahrzeug (10) ausgestaltet ist, um die Aktivierbarkeit der Funktion mittels Funk auszuschalten, sobald sich die tragbare Vorrichtung (30) aus der Funkempfangsreichweite des Fahrzeugs (10) bewegt.

12. System nach Anspruch 11,
**dadurch gekennzeichnet,**
**dass** die tragbare Vorrichtung (30) Signalisierungsmittel (5) umfasst, um zu signalisieren, dass die Aktivierbarkeit der Funktion mittels Funk ausgeschaltet ist.

13. System nach Anspruch 11 oder 12,
**dadurch gekennzeichnet,**
**dass** das System (40) zur Durchführung des Verfahrens nach einem der Ansprüche 1-8 ausgestaltet ist.

## Claims

1. A method for activating a function of a vehicle (10), comprising:
transmitting a radio command from a portable device (30) to the vehicle (10), and
activating the function, if an enabled status of the function is not switched off,
wherein the enabled status of the function is switched off by means of radio, as soon as the portable device (30) is moved out of the radio reception range of the vehicle (10).

2. A method according to Claim 1,
**characterized in**
**that** the function comprises at least of one function from a group consisting of:
Unlocking a central locking of the vehicle (10), and
starting a motor of the vehicle (10).

3. A method according to Claim 1 or 2,
**characterized in**
**that** a switching-off of the enabled status is performed by a user.

4. A method according to any one of the preceding claims,
**characterized in**
**that** the enabled status of the function is switched off by means of radio, as soon as a specific radio command from the portable device (30) is received by the vehicle (10).

5. A method according to any one of the preceding claims,
**characterized in**
**that** the enabled status of the function is only switched off by means of radio, if a specific radio command of the portable device (30) is received beforehand by the vehicle (10).

6. A method according to any one of the preceding claims,
**characterized in**
**that** the enabled status of the function is switched off by means of radio for a predetermined time period, wherein the function can be activated by means of radio after the expiration of the time period.

7. A method according to Claim 6,
**characterized in**
**that** the time period can be configured.

8. A method according to any one of the preceding claims,
**characterized in**
**that** it is signaled by means of the portable device, that the enabled status of the function is switched off by means of radio.

9. A vehicle, which includes radio means, and portable device (30), which includes radio transmission means (4),
wherein the radio means (1) are designed for receiving a radio command, and wherein the vehicle (10) is designed for activating a function of the vehicle (10) depending upon the radio command, if an enabled status of the function is not switched off by means of radio,
wherein the vehicle (10) is designed, in order to switch off the enabled status of the function by means of radio, as soon as the portable device (30) is moved out of the radio reception range of the vehicle (10).

10. A vehicle according to Claim 9, which is designed for implementing the method according to any one of Clams 1-8.

11. A system, which comprises a portable device (30) and a vehicle (10),
wherein the portable device (30) includes radio transmission means (4), in order to transmit a radio command to the vehicle (10),
wherein the vehicle (10) includes radio means (1), in order to receive the radio command,
wherein the vehicle (10) is designed in order to activate a function of the vehicle (10) depending on the radio command, if the enabled status of the function is not switched off by means of the radio,
wherein the vehicle (10) is designed, in order to switch off the enabled status of the function by means of radio, as soon as the portable device (30) is moved out of the radio reception range of the vehicle (10).

12. A system according to Claim 11,
**characterized in**
**that** the portable device (30) includes signaling means (5), in order to signal, that the enabled status of the function is switched off by means of radio.

13. A system according to Claim 11 or 12,
**characterized in**
**that** the system (40) is designed for implementing the method according to any one of Claims 1-8.

## Revendications

1. Procédé d'activation d'une fonction d'un véhicule (10), comprenant :
l'émission d'une instruction radio par un dispositif portatif (30) au véhicule (10) et
l'activation de la fonction lorsqu'une possibilité d'activation de la fonction par radio n'est pas désactivée,
la possibilité d'activation de la fonction par radio étant désactivée dès que le dispositif portatif (30) se déplace hors de la portée de réception radio du véhicule (10).

2. Procédé selon la revendication 1,
**caractérisé en ce que**
la fonction comprend au moins une fonction dans le groupe constitué de :
déverrouillage d'un verrouillage central du véhicule (10) et
démarrage d'un moteur du véhicule (10).

3. Procédé selon la revendication 1 ou 2,
**caractérisé en ce que**
une désactivation de la possibilité d'activation est effectuée par un utilisateur.

4. Procédé selon l'une des revendications précédentes,
**caractérisé en ce que**
la possibilité d'activation de la fonction par radio est désactivée dès qu'une instruction radio déterminée provenant du véhicule (10) est reçue par le dispositif portatif (30).

5. Procédé selon l'une des revendications précédentes,
**caractérisé en ce que**
la possibilité d'activation de la fonction par radio n'est désactivée que lorsqu'une instruction radio déterminée provenant du véhicule (10) est reçue par le dispositif portatif (30).

6. Procédé selon l'une des revendications précédentes,
**caractérisé en ce que**
la possibilité d'activation de la fonction par radio est désactivée pour une période prédéterminée, la fonction étant activable par radio après l'écoulement de la période.

7. Procédé selon la revendication 6,
**caractérisé en ce que**
la période peut être configurée.

8. Procédé selon l'une des revendications précédentes,
**caractérisé en ce que**
au moyen du dispositif portatif, il est signalé que la possibilité d'activation de la fonction par radio est désactivée.

9. Véhicule qui comprend des moyens radio et un dispositif portatif (30) qui comprend des moyens d'émission radio (4),
les moyens radio (1) étant conçus pour la réception d'une instruction radio et le véhicule (10) étant conçu pour l'activation d'une fonction du véhicule (10) en fonction de l'instruction radio, lorsqu'une possibilité d'activation de la fonction par radio n'est pas désactivée,
le véhicule (10) est conçu pour désactiver la possibilité d'activation de la fonction par radio dès que le dispositif portatif (30) se déplace hors de la portée de réception radio du véhicule (10).

10. Véhicule selon la revendication 9, qui est conçu pour l'exécution du procédé selon l'une des revendications 1 à 8.

11. Système qui comprend un dispositif portatif (30) et un véhicule (10),
le dispositif portatif (30) comprenant des moyens d'émission radio (4) afin d'envoyer une instruction radio au véhicule (10),
le véhicule (10) comprenant des moyens radio (1) afin de recevoir l'instruction radio,
le véhicule (10) étant conçu pour activer une fonction du véhicule (10) en fonction de l'instruction radio lorsqu'une possibilité d'activation de la fonction par radio n'est pas désactivée,
le véhicule (10) étant conçu pour désactiver la possibilité d'activation de la fonction par radio dès que le dispositif portatif (30) se déplace hors de la portée de réception radio du véhicule (10).

12. Système selon la revendication 11,
**caractérisé en ce que**
le dispositif portatif (30) comprend des moyens de signalisation (5) afin de signaler que la possibilité d'activation de la fonction par radio est désactivée.

13. Système selon la revendication 11 ou 12,
**caractérisé en ce que**
le système (40) est conçu pour l'exécution du procédé selon l'une des revendications 1 à 8.
